# EUROPEAN PATENT APPLICATION

(11) **EP 2 378 625 A2**
(43) Date of publication of application: **19.10.2011**
(21) Application number: 10186774.5
(22) Date of filing: 06.10.2010
(51) Int. Cl.: H02J 9/00, H02J 7/00

(54) **Backup power supply for a vehicle**

(30) Priority: 16.04.2010 TW 099206961
(71) Applicant: Exa Energy Technology Co., Ltd., Taichung City 407 (TW)
(72) Inventor: Jan, Yihsong, Taipei City (TW)
(74) Representative: Lang, Christian

(57) **Abstract**

The backup power supply of the present invention is adapted for a vehicle, which has a power system. The backup power supply includes a motor electronic appliance (1) and a battery (2). The motor electronic appliance is installed in the vehicle and electrically connects to the power system of the vehicle. The battery electrically connects to the motor electronic appliance, such that the battery can receive electric power from the power system or can supply electric power to the power system. As such, the backup power supply supplies backup power to the power system during the replacement of the motor lead-acid battery.

## Description

### BACKGROUND OF THE INVENTION

### Field of the Invention

The present invention relates to a backup power supply for a vehicle.

### Description of the Prior Art

Lead-acid batteries are commonly installed on automobiles and motor scooters to supply the power for the starting of the engine and to other motor electronic appliances, such as radios and speakers. When the lead-acid battery is dead, it should be replaced by a new one. However, the motor electronic appliances of the vehicle are then out of power supply during the battery replacement, which will cause the missing of their records and setups. A conventional solution to such problem is using another lead-acid battery to connect to the power system before the replacement procedure. However, this is still not convenient for the user.

The present invention is, therefore, arisen to obviate or at least mitigate the above mentioned disadvantages.

### SUMMARY OF THE INVENTION

The main object of the present invention is to provide a backup power supply for a vehicle to prohibit the missing or records and setups of motor electronic appliances during the lead-acid battery replacement.

To achieve the above and other objects, the backup power supply includes a motor electronic appliance and a battery. The motor electronic appliance is installed in the vehicle and electrically connects to the power system of the vehicle. The battery electrically connects to the motor electronic appliance, such that the battery can receive electric power from the power system or can supply electric power to the power system. As such, the backup power supply supplies backup power to the power system during the replacement of the motor lead-acid battery.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective drawing showing a backup power supply of the present invention;
Fig. 2 is a perspective drawing showing another backup power supply of the present invention;
Fig. 3 is a view showing a backup power supply of the present invention.

### DETAILED DESCRIPTION OF THE PREFERRED EMBODIMENTS

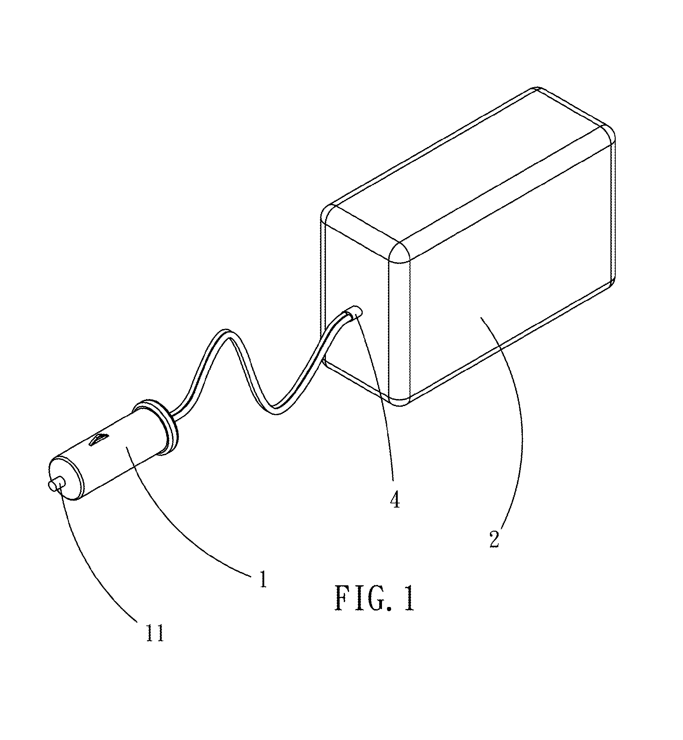

Please refer to Fig. 1. The backup power supply of the present invention includes a motor electronic appliance 1, a battery 2 and a means for switching the operation state of the battery 2.

The motor electronic appliance 1 can be cigar-lighter-type and thus can be directly installed to a cigar-lighter socket which has already been installed in the vehicle. The motor electronic appliance 1 has a connector 11 formed on its one end to connect the motor electronic appliance 1 with the power system of the vehicle.

The battery 2 is a rechargeable battery, such as a lithium iron phosphate battery, a nickel metal hydride battery, a nickel cadmium battery or a lithium ion battery, whose cathode can be made from LiCo_{1/3}Ni_{1/3}Mn_{1/3}O₂, LiCoO₂ or LiMn₂O₄. Preferably, the battery 2 is a lithium iron phosphate battery whose capacity is 10mAh to 10Ah and whose voltage is 8V to 24V. Further, the anode of the lithium iron phosphate battery can be vanadium, manganese, cobalt or other transition metal. The battery 2 is used to store electrical power or to supply electrical power to other apparatuses. The battery 2 may be further provided with a voltage stabilizer, a transformer and an over-load-prohibiting circuit.

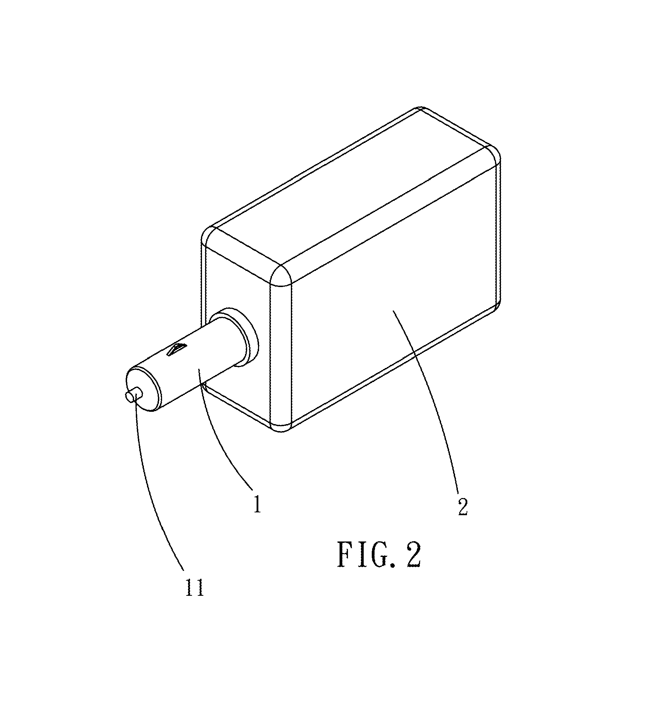

The battery 2 can be electronically connected to the motor electronic appliance 1 by a connecting wire, as shown in Fig. 1. The connecting wire is formed with a terminal 4 to plug in an output bore of the battery 2. As such, the battery can supply electric power to the power system via the connecting wire, the motor electronic appliance 1 and the cigar-lighter socket. In the other embodiment of the present invention, the battery 2 can directly connect to the motor electronic appliance 1 as shown in Fig. 2.

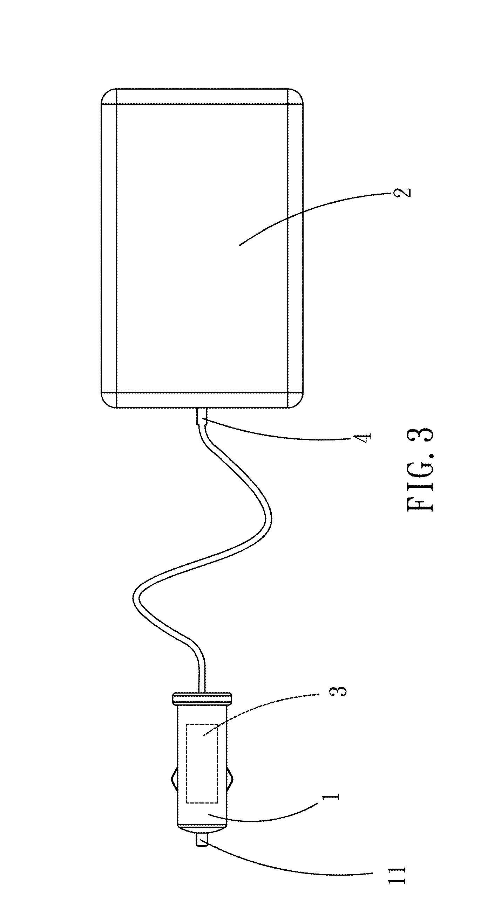

The switching means can switch the battery 2 between a charging state and a discharging state. When the battery 2 is at the charging state, the battery receives electric power from the power system. And when the battery 2 is at the discharging state, the battery supplies electric power to the power system. Please refer to Fig. 3. A protective circuit board 3 is disposed on the motor electronic appliance 1 or the battery 2 to prohibit the battery from over-charging or over-discharging.

Thereby, the backup power supply can supply backup power to the power system during the replacement of the lead-acid battery. The other motor electronic appliances, such as alarms, radios and speakers can still work if needed, and no records or setups will miss during the battery replacement procedure. Further, the backup power supply can also be used to start the engine when the lead-acid battery is dead. In addition, the application of the lithium iron phosphate battery can significantly reduce the volume of the battery, so that it is portable and light-weighted. The electronic appliance can be plugged into a cigar-lighter socket, thus it is very convenient for the user to install the backup power supply of the present invention.

## Claims

1. A backup power supply for a vehicle, the vehicle having a power system, the backup power supply comprising
a motor electronic appliance (1), having a connector (11) electronically connecting the motor electronic appliance (1) with the power system of the vehicle;
a battery (2), electronically connecting to the motor electronic appliance (1).

2. The backup power supply of claim 1, further comprising a means for switching the battery (2) between a charging state and a discharging state, when the battery (2) being at the charging state, the battery (2) receiving electric power from the power system, when the battery (2) being at the discharging state, the battery (2) supplying electric power to the power system.

3. The backup power supply of claim 1, wherein a protective circuit board (3) is disposed on the motor electronic appliance (1) or the battery (2) to prohibit the battery from over-charging or over-discharging.

4. The backup power supply of claim 1, wherein the battery (2) is a rechargeable battery.

5. The backup power supply of claim 4, wherein the rechargeable battery is a lithium iron phosphate battery.

6. The backup power supply of claim 4, wherein the rechargeable battery is a nickel metal hydride battery.

7. The backup power supply of claim 4, wherein the rechargeable battery is a nickel cadmium battery.

8. The backup power supply of claim 4, wherein the rechargeable battery is a lithium ion battery.

9. The backup power supply of claim 1, wherein the motor electronic appliance (1) is pluggable into a cigar-lighter socket of the vehicle.

10. The backup power supply of claim 5, wherein the lithium iron phosphate battery has an anode being made from vanadium, manganese or cobalt.

11. The backup power supply of claim 8, wherein the lithium ion battery has a cathode being made from LiCo_{1/3}Ni_{1/3}Mn_{1/3}O₂.

12. The backup power supply of claim 8, wherein the lithium ion battery has a cathode being made from LiCoO₂.

13. The backup power supply of claim 8, wherein the lithium ion battery has a cathode being made from LiMn_{2O4}.
